# EUROPÄISCHE PATENTANMELDUNG

(11) **EP 1 686 506 A1**
(43) Veröffentlichungstag der Anmeldung: **02.08.2006**
(21) Anmeldenummer: 05001862.1
(22) Anmeldetag: 28.01.2005
(51) Int. Cl.: G06K 7/00, H04B 7/26

(54) **Kommunikationsverfahren für ein RFID-System**

(71) Anmelder: Feig Electronic GmbH, 35781 Weilburg-Waldhausen (DE)
(72) Erfinder: Desch, Markus, 65527 Niedernhausen (DE); Rödig, Michael, 35580 Wetzlar (DE); Walk, Eldor, 65558 Heistenbach (DE); Wennrich, Andreas, 65554 Limburg (DE)
(74) Vertreter: Knefel, Cordula

(57) **Zusammenfassung**

Kommunikationsverfahren für ein RFID-System, bestehend aus wenigstens zwei Schreib-/Lesestationen, die wenigstens einen gemeinsamen Sendekanal zur Kommunikation von einer Schreib-/Lesestation zu jeweils wenigstens einem Transponder (Sendevorgang) nutzen können, und die wenigstens einen zweiten Kanal zur Kommunikation von dem jeweils wenigstens einen Transponder zu der jeweiligen Schreib-/Lesestation (Empfangskanal) nutzen können, bei dem wenigstens eine Steuereinheit und/oder eine Schreib-/Lesestation während eines Hörvorganges die Belegung wenigstens eines Kanales zur Kommunikation von der Schreib-/Lesestation zu dem Transponder ermittelt, und bei dem alle Hör- und/oder Sendevorgänge auf einem Sendekanal synchronisiert werden.

## Beschreibung

Kommunikationsverfahren für ein RFID-System, bestehend aus wenigstens zwei Schreib-/Lesestationen, die wenigstens einen gemeinsamen Sendekanal zur Kommunikation von einer Schreib-/Lesestation zu jeweils wenigstens einem Transponder (Sendevorgang) nutzen können, und die wenigstens einen zweiten Kanal zur Kommunikation von dem jeweils wenigstens einen Transponder zu der jeweiligen Schreib-/Lesestation (Empfangskanal) nutzen können, bei dem wenigstens eine Steuereinheit und/oder eine Schreib-/Lesestation während eines Hörvorganges die Belegung wenigstens eines Kanales zur Kommunikation von der Schreib-/Lesestation zu dem Transponder ermittelt.

Gemäß dem Stand der Technik stehen im Bereich von UHF-RFID-Systemen innerhalb eines Frequenzbandes, welches zum Betrieb von UHF-RFID-Systemen vorgesehen ist, zumeist mehrere Kanäle zum Informationsaustausch zwischen Transponder und Schreib-/Lesestation zur Verfügung. Die Mehrzahl der Kanäle ermöglicht es, dass mehrere RFID-Systeme gleichzeitig und nahe beieinander betrieben werden können. Unter dem Begriff Kanal wird hierbei ein Teilfrequenzband eines Gesamtfrequenzbandes verstanden, wobei die Anzahl und Frequenzbandbreite eines Kanales anwendungsspezifisch variieren kann oder durch Funkvorschriften vorgegeben wird.

In den USA stehen nach der dort geltenden Funkvorschrift FCC 47 CFR Part 15 beispielsweise 50 Kanäle zur Verfügung. Jede Schreib-/Lesestation muss ihre abgegebene Leistung gleichmäßig auf die 50 Kanäle verteilen. Das heißt, nach einer bestimmten Zeit muss die Schreib-/Lesestation von einem zu einem anderen Kanal wechseln, wobei der neue Kanal zufällig gewählt werden kann. Die Schreib-/ Lesestation muss nur sicherstellen, dass sie über einen längeren Zeitraum gesehen alle Kanäle mit der gleichen Wahrscheinlichkeit belegt und damit ihre Energie gleichmäßig auf die 50 Kanäle verteilt. Solange im Verhältnis zu den 50 Kanälen nur eine geringe Anzahl von Schreib-/Lesestationen in naher Umgebung zueinander arbeiten, werden alle Schreib-/Lesestationen ohne Beeinträchtigung arbeiten können.

In Europa stehen für UHF-RFID-Systeme nach der geltenden Funkvorschrift ETSI EN 302 208-1 V1.1.1 (2004-09) maximal 15 Kanäle zur Verfügung, wobei nur zehn Kanäle für Schreib-/Lesestationen mit hoher Sendeleistung beziehungsweise Kommunikationsreichweite mit dem Transponder genutzt werden können. Will eine Schreib-/Lesestation einen dieser Kanäle nutzen, so wird durch die europäische Funkvorschrift vorgeschrieben, dass die Schreib-/Lesestation vor der Nutzung des Kanales prüfen muss, ob der Kanal durch kein anderes Sendesystem zu diesem Zeitpunkt genutzt wird. Auch wenn die Schreib-/Lesestation bereits einen Kanal nutzt, muss sie ihren Sendevorgang nach einer bestimmten Zeit für eine definierte Mindestperiode unterbrechen. Bevor sie ihren Sendevorgang wieder aufnehmen darf, muss die Schreib-/ Lesestation dann prüfen, ob dieser Kanal nicht zwischenzeitlich durch ein anderes Sendesystem genutzt wird. Stellt die Schreib-/Lesestation die Nutzung des Kanales durch ein anderes Sendesystem fest, so darf sie nicht mehr auf diesem Kanal senden, sondern muss sich einen anderen freien Kanal suchen. Steht kein freier Kanal zum Senden zur Verfügung, ist die Schreib-/Lesestation nicht in der Lage, ihren Betrieb weiterzuführen und mit Transpondern zu kommunizieren. Dies bedeutet in der Praxis, dass der Betrieb von Schreib-/ Lesestationen mit hoher Leistung auf die Anzahl der zugelassenen Sendekanäle beschränkt ist, sofern die Schreib-/ Lesestationen dabei räumlich derart zueinander angeordnet sind, dass eine erste Schreib-/Lesestation das Sendesignal einer benachbarten Schreib-/Lesestation empfangen kann. Im Geltungsbereich der europäischen Funkvorschrift dürften unter den oben genannten Bedingungen somit also maximal zehn Schreib-/Lesestationen mit hoher Leistung nahe beieinander betrieben werden.

Diese Einschränkungen führen dazu, dass der praktische Einsatz von UHF-RFID-Systemen stark eingeschränkt wird.

Wenn beispielsweise an jedem Tor eines Logistikzentrums mit beispielsweise 50 Toren das Be- und Entladen von Waren mittels an der Ware befindlicher Transponder erfasst werden soll, muss an jedem Tor mindestens eine Schreib-/ Lesestation angeordnet werden, was im beispielhaften Fall den Einsatz von mindestens 50 Schreib-/Lesestationen in relativer Nähe zueinander notwendig macht.

Ferner sind weitere Anwendungen mit UHF-RFID-Systemen in der Praxis sinnvoll, die durch die geltenden Funkvorschriften verhindert werden.

Ein Beispiel für eine solche weitere praktische Anwendung ist ein so genanntes Gate-System, bei dem mindestens zwei Antennen so an den Seiten eines zu überwachenden Durchgangsbereiches angeordnet sind, dass der Durchgangsbereich vollständig durch die Antennen erfasst werden kann. In einer solchen Anwendung kann es sinnvoll sein, die einzelnen Antennen mit einer jeweils eigenständigen Schreib-/ Lesestation zu betreiben. Ein Grund hierfür kann beispielsweise sein, dass die Länge eines Antennenkabels, welches die Antenne mit der Schreib-/Lesestation verbindet, eine so große Länge erreichen würde, dass die längenbedingten Leitungsverluste die von der Antenne abgestrahlte Leistung übermäßig reduzieren, oder dass das von der Antenne empfangene Signal durch die Leitungsverluste so stark gedämpft wird, dass der Empfang von Daten der Transponder für die Schreib-/Lesestation beeinträchtigt wird.

Um die beispielhaft beschriebenen problematischen Anwendungen mit UHF-RFID-Schreib-/Lesestationen realisieren zu können, wird in RFID-Fachgremien der Vorschlag diskutiert, das beschriebene Problem dadurch zu lösen, dass mehrere Schreib-/Lesestationen den gleichen Kanal zum Senden von Daten und Energie zum Transponder nutzen (Sendekanal) und wenigstens einen zweiten Kanal zum Empfangen von Daten vom Transponder nutzen (Empfangskanal). Dabei ist, so zeigen theoretische Betrachtungen und praktische Versuche, der Abstand, in dem zwei Schreib-/Lesestationen auf demselben Kanal betrieben werden können, dann erreicht, wenn die Entfernung zwischen den Schreib-/Lesestationen beziehungsweise zwischen den an die Schreib-/Lesestation angeschlossenen Antennen das Doppelte ihrer Energiereichweite übersteigt. Als Energiereichweite wird dabei der Abstand zwischen Schreib-/Lesestation und Transponder beziehungsweise zwischen Antenne und Transponder verstanden, in dem der Transponder von der Schreib-/Lesestation beziehungsweise von der an die Schreib-/Lesestation angeschlossenen Antenne mit ausreichender Energie versorgt wird, so dass er Daten senden kann. Das heißt, solange der Abstand zwischen den Antennen der einzelnen Schreib-/Lesestationen die oben genannte Bedingung einhält, lassen sich mehrere Schreib-/ Lesestationen mit gleicher Sendefrequenz beziehungsweise im gleichen Sendekanal betreiben. Durch diese Vorgehensweise kann somit eine große Anzahl von Schreib-/Lesestationen dicht nebeneinander auf demselben Sendekanal betrieben werden. Dieser Vorschlag wird in den Fachgremien unter dem Begriff des "Dense Reader Mode" diskutiert, also einer Betriebsart, die den Betrieb mehrerer Schreib-/Lesestationen dicht nebeneinander ermöglichen soll (siehe zum Beispiel www.autoid.org/SC31/2004/dec/SG3_200411_430_Gen2Update. pdf.).

Da der Empfänger einer Schreib-/Lesestation eine hohe Empfindlichkeit benötigt, um die schwachen Antwortsignale eines beispielsweise am Rande seiner Energiereichweite befindlichen Transponders empfangen zu können, ist der Empfänger automatisch auch so empfindlich, dass er die Sendesignale einer weiteren Schreib-/Lesestation empfängt, auch wenn sich diese in großer Entfernung zur ersten Schreib-/ Lesestation befindet.

Der oben beschriebene Vorschlag steht jedoch im Widerspruch zu der europäischen Funkvorschrift, nach der eine Schreib-/Lesestation nur dann einen Sendekanal belegen darf, wenn sie zuvor geprüft hat, ob dieser Sendekanal nicht bereits von einem anderen Sender belegt ist (siehe RFID Journal, Why UHF RFID Systems Won't Scale.pdf).

Das der Erfindung zugrunde liegende technische Problem besteht darin, eine Lösung für den beschriebenen Widerspruch anzugeben und den Betrieb mehrerer Schreib-/Lesestationen auf demselben Kanal zu ermöglichen und gleichzeitig sicherzustellen, dass die Schreib-/Lesestation nur dann einen Sendekanal belegt, nachdem sie geprüft hat, ob dieser Kanal nicht bereits von einem anderen Sendesystem belegt ist.

Dieses technische Problem wird durch ein Verfahren mit den Merkmalen des Anspruches 1 gelöst.

Gemäß der Erfindung wird ein Kommunikationsverfahren für ein RFID-System angegeben, bestehend aus wenigstens zwei Schreib-/Lesestationen, die wenigstens einen gemeinsamen Sendekanal zur Kommunikation von einer Schreib-/Lesestation zu jeweils wenigstens einem Transponder (Sendevorgang) nutzen können, und die wenigstens einen zweiten Kanal zur Kommunikation von dem jeweils wenigstens einen Transponder zu der jeweiligen Schreib-/Lesestation (Empfangskanal) nutzen können, und bei dem wenigstens eine Steuereinheit und/oder eine Schreib-/Lesestation während eines Hörvorganges die Belegung wenigstens eines Kanales zur Kommunikation von der Schreib-/Lesestation zu dem Transponder ermittelt, und bei dem alle Hör- und/oder Sendevorgänge auf einem Sendekanal synchronisiert werden. Durch diese Synchronisation ist es möglich, dass mehrere Schreib-/Lesestationen gleichzeitig auf einem Kanal senden und die in Europa geltende Norm dennoch umgesetzt ist.

Gemäß der Erfindung besteht die Möglichkeit, dass die Schreib-/Lesestationen eines RFID-Systems vernetzt sind oder dass die Schreib-/Lesestationen autark, das heißt nicht vernetzt ausgebildet sind.

Sind die Schreib-/Lesestationen miteinander vernetzt, besteht die Möglichkeit, dass die Synchronisation der Hör-und/oder Sendevorgänge von einer gleichzeitig die Funktion der Steuereinheit übernehmenden Schreib-/Lesestation durchgeführt wird.

Gemäß einer weiteren Ausführungsform der Erfindung führt wenigstens eine Schreib-/Lesestation den Hörvorgang durch und prüft, ob der zuletzt verwendete oder wenigstens ein anderer Kanal frei ist. Dieses Verfahren ist bei der vernetzten wie auch bei der unvernetzten Ausführungsform möglich.

Es besteht bei der vernetzten wie auch bei der unvernetzten Variante auch die Möglichkeit, dass sämtliche Schreib-/Lesestationen des RFID-Systems den Hörvorgang durchführen und prüfen, ob der jeweils zuletzt verwendete oder wenigstens ein anderer Kanal frei ist.

Gemäß einer weiteren vernetzten Ausführungsform können sämtliche Schreib-/Lesestationen des RFID-Systems und eine zusätzliche Steuereinheit den Hörvorgang durchführen und prüfen, ob der jeweils zuletzt verwendete oder wenigstens ein anderer Kanal frei ist.

Gemäß der Erfindung erfolgt vorteilhaft eine Synchronisation des Zeitfensters, in dem die vernetzten Schreib-/ Lesestationen des RFID-Systems nicht senden und/oder wenigstens hören.

Vorteilhaft wird bei der vernetzten Ausführungsform in einem Kanal der Sendevorgang der wenigstens einen Schreib-/ Lesestation für ein Zeitfenster unterbrochen, und der Beginn und das Ende dieses Zeitfensters wird von der Steuereinheit für alle auf dem Kanal sendenden Schreib-/Lesestationen synchron gesteuert. Das bedeutet, dass sämtliche Schreib-/Lesestationen das gleiche Zeitfenster aufweisen, in dem sie nicht senden.

Gemäß einer weiteren vorteilhaften Ausführungsform der vernetzten Variante der Erfindung wird in einem Kanal der Sendevorgang der wenigstens einen Schreib-/Lesestation für ein Zeitfenster unterbrochen, und der Beginn dieses Zeitfensters wird von der Steuereinheit für alle auf dem Kanal sendenden Schreib-/Lesestationen synchron gesteuert, und das Zeitfenster weist eine für alle Schreib-/Lesestationen vorgegebene Dauer auf.

Weiterhin besteht die Möglichkeit, dass der Beginn des Sendevorgangs von der Steuereinheit für alle auf dem Kanal sendenden Schreib-/Lesestationen synchron gesteuert wird, und dass der Sendevorgang eine für alle Schreib-/Lesestationen vorgegebene Dauer aufweist. Auch diese Ausführungsform gilt für die vernetzte Variante des RFID-Systems.

Vorteilhaft steuert die Steuereinheit, auf welchem Kanal oder auf welchen Kanälen die vernetzten Schreib-/ Lesestationen senden. Es ist hierbei auch möglich, dass die Steuereinheit Gruppen von Schreib-/Lesestationen bestimmt, die auf bestimmten, gemeinsamen Kanälen senden.

Bei der vernetzten Variante des RFID-Systems, bestehend aus wenigstens zwei Schreib-/Lesestationen, kann die Steuereinheit die wenigstens eine Schreib-/Lesestation über wenigstens eine Steuerleitung ansteuern, über die wenigstens ein Steuersignal übertragen wird. Das hierbei übertragene Signal kann ein binäres Signal sein, beispielsweise auch ein Datenwort. Das Datenwort enthält gegenüber dem binären Signal noch zusätzliche Informationen.

Neben der Ansteuerung über die Steuerleitung besteht auch die Möglichkeit, dass die Steuereinheit die wenigstens eine Schreib-/Lesestation drahtlos ansteuert.

Besonders vorteilhaft steuert die Steuereinheit bei der vernetzten Ausführungsform die wenigstens eine Schreib-/Lesestation über RF (Radio Frequency) über einen gesonderten Kanal, der ansonsten für die Datenübertragung vom Transponder zur Schreib-/Lesestation verwendet werden kann, an.

In einer vorteilhaften Ausführungsform kann jede Schreib-/Lesestation eine zyklische Information an die benachbarten Schreib-/Lesestationen senden, die eine Zeitinformation darüber enthält, wie lange die Schreib-/Lesestation bereits auf dem derzeitigen Sendekanal sendet oder wie lange sie noch auf dem Sendekanal senden wird. Aufgrund dieser Zeitinformation kann eine Schreib-/Lesestation, die beispielsweise nur zeitweise senden muss, sich mit der Schreib-/Lesestation synchronisieren, die als nächstes ihren Sendevorgang unterbrechen wird.

Gemäß der unvernetzten Anordnung der Schreib-/Lesestationen gibt es die Möglichkeiten, einen so genannten Master vorzusehen oder alle Schreib-/Lesestationen gleichberechtigt und ohne Vorzugsstellung prüfen zu lassen, ob ein freier Kanal vorhanden ist.

Sind die Schreib-/Lesestationen des RFID-Systems autark, wird in einem Kanal der Sendevorgang der wenigstens einen Schreib-/Lesestation für ein Zeitfenster unterbrochen, und die wenigstens eine Schreib-/Lesestation beginnt den Sendevorgang auf einem Kanal, nachdem der Kanal für eine Mindestzeit als frei detektiert wurde.

Hierbei ist es vorteilhaft, dass die Mindestzeit, für die ein Kanal als frei detektiert werden muss, für alle Schreib-/Lesestationen dieselbe Dauer aufweisen muss.

Auch ist es vorteilhaft, dass das Zeitfenster, für das der Sendevorgang unterbrochen wird, für alle Schreib-/Lesestationen, die auf einem Kanal senden, dieselbe Dauer aufweist.

Gemäß einer bevorzugten Ausführungsform weist das Zeitfenster eine Dauer von fünf Millisekunden (ms) oder 100 Millisekunden (ms) auf. Das Zeitfenster kann jedoch auch eine andere Dauer aufweisen.

Weisen die Zeitfenster der Sendeunterbrechung nicht für alle Schreib-/Lesestationen eines Kanales die gleiche vordefinierte Dauer auf, so ist es vorteilhaft, dass die Dauer des Zeitfensters, für das der Sendevorgang von einer ersten Schreib-/Lesestation unterbrochen wird, von wenigstens einer weiteren Schreib-/Lesestation detektiert und für ein eigenes Zeitfenster übernommen wird. In diesem Fall weisen nach dem Mithören von wenigstens einem Pause-Sendezyklus sämtliche auf einem Kanal sendenden Schreib-Lesestationen Zeitfenster für die Sendeunterbrechung auf, die die gleiche Dauer aufweisen. Es erfolgt also eine Adaption auf eine vorhandene Pausenlänge des Systems durch Mithören von mindestens einem Pause-/Sendezyklus.

Um der geltenden europäischen Norm zu genügen, ist es erforderlich, dass der Sendevorgang jeder Schreib-/Lesestation nach einer maximalen Sendezeit unterbrochen wird.

Besonders vorteilhaft ist die Dauer jedoch relativ kurz gewählt, da in diesem Fall wesentlich häufiger ein Synchronisieren weiterer Schreib-/Lesestationen möglich ist, da erst bei einer Sendeunterbrechung weitere Schreib-/ Lesestationen die Möglichkeit haben, synchronisiert mit dem Senden zu beginnen. Solange wenigstens eine Schreib-/Lesestation sendet, können weitere Schreib-/Lesestationen auf diesem Kanal nicht mit dem Sendevorgang beginnen.

Bei der Ausführungsform des RFID-Systems aus autarken Schreib-/Lesestationen mit dem Master fängt der Master an zu senden, wenn ein Kanal für ein bestimmtes Zeitfenster nicht belegt ist, und die anderen Schreib-/Lesestationen synchronisieren sich auf diesen Master.

Die erste Schreib-/Lesestation (Master) des RFID-Systems beginnt also mit dem Sendevorgang, und die weiteren Schreib-/Lesestationen synchronisieren sich auf den Beginn und das Ende des Sendevorganges der ersten Schreib-/Lesestation (Master).

Vorteilhaft kommunizieren die Schreib-/Lesestationen mit passiven Transpondern. Passive Transponder beinhalten keine eigene Energieversorgung, die gesamte Energie zum Betrieb passiver Transponder wird dem (elektrischen/magnetischen) Feld der Schreib-/Lesestation entnommen.

Gemäß einer weiteren vorteilhaften Ausführungsform der Erfindung kommunizieren die Schreib-/Lesestationen auf dem UHF-Frequenzband mit den Transpondern.

Es wird gemäß der Erfindung also ein Verfahren angegeben, das auf dem Grundsatz basiert, dass mehrere Schreib-/ Lesestationen, die nahe beieinander betrieben werden, auf einem Sendekanal senden können, ohne sich zu beeinflussen, indem die Hör- und/oder Sendevorgänge synchronisiert werden. Alle Schreib-/Lesestationen unterbrechen beispielsweise zeitlich synchron den Sendebetrieb auf dem verwendeten Kanal, um feststellen zu können, ob ein anderes Sendesystem auf diesem gemeinsam genutzten Sendekanal sendet. Während dieser von allen Schreib-/Lesestationen zum selben Zeitpunkt eingelegten Sendepause können eine oder mehrere der Schreib-/ Lesestationen prüfen, ob der von allen Schreib-/Lesestationen gewählte Sendekanal durch andere Sendesysteme benutzt wird, oder ob sie einen anderen freien Sendekanal finden können, auf dem die Schreib-/Lesestationen wieder gemeinsam oder im Verbund mit anderen Schreib-/Lesestationen gemeinsam senden können.

Durch die oben beschriebene Lösung werden die eingangs beispielhaft aufgeführten problematischen Einsatzfälle für Schreib-/Lesestationen wirkungsvoll gelöst. So kann eine große Anzahl von Schreib-/Lesestationen dicht nebeneinander betrieben werden, ohne dass sie sich gegenseitig negativ beeinflussen, und es ist durch die synchronisierte und gleichzeitige Überprüfung der Kanalbelegung zudem die Konformität zu bestehenden Funkvorschriften hergestellt.

Weitere Merkmale und Vorteile der Erfindung ergeben sich anhand der zugehörigen Zeichnungen, in denen Ausführungsbeispiele des erfindungsgemäßen Verfahrens beispielhaft dargestellt sind, und zwar zeigen:
- Fig. 1: eine Darstellung des Grundprinzips der Kanalwahl des Dense Reader Mode gemäß dem Stand der Technik;
- Fig. 2: eine Anordnung mehrerer Schreib-/Lesestationen;
- Fig. 3: die zeitliche Abfolge des Sendevorgangs und der Unterbrechung des Sendevorgangs auf einem Kanal (A) und einem weiteren Kanal (B);
- Fig. 4: eine Ausführungsform, bei der die Schreib-/ Lesestationen, die jeweils auf demselben Sendekanal arbeiten, über Verbindungen durch eine Steuereinheit synchronisiert werden;
- Fig. 5: eine weitere Ausführungsform mit mehreren Schreib-/Lesestationen, wobei einer Schreib-/ Lesestation die zusätzliche Funktion einer Steuereinheit zukommt;
- Fig. 6: eine weitere Ausführungsform, in der die Schreib-/Lesestationen mittels Verbindungen miteinander in Form eines Ringes verbunden sind;
- Fig. 7: ein geändertes Ausführungsbeispiel;
- Fig. 8: ein Verfahren, bei dem eine Synchronisation von Schreib-/Lesestationen ohne zusätzliche Verbindung realisiert ist;
- Fig. 9: ein Verfahren, bei dem eine temporär sendende Schreib-/Lesestation synchronisiert wird.

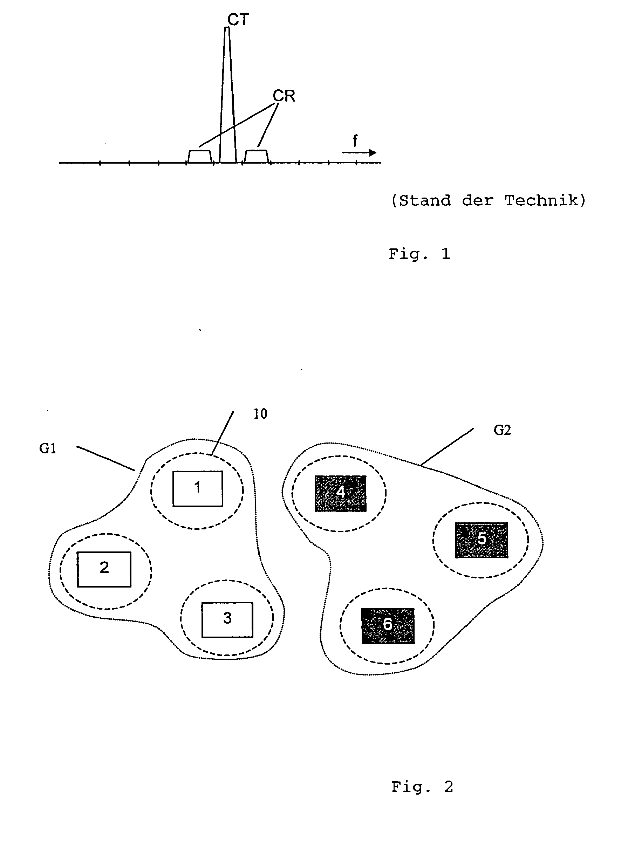

In Fig. 1 ist das Grundprinzip der Kanalwahl des Dense Reader Mode gemäß dem Stand der Technik dargestellt, wobei (CT) einen belegten Sendekanal und (CR) die dazugehörigen Empfangskanäle darstellen. Sind mehrere Schreib-/Lesestationen so zueinander angeordnet, dass die jeweiligen Bereiche, in denen sie mit Transpondern kommunizieren können, die Bedingungen des Dense Reader Mode einhalten, können diese Schreib-/Lesestationen auf der gleichen Sendefrequenz (CT) senden, ohne dass dadurch die jeweilige Kommunikation zwischen Transpondern und Schreib-/Lesestation beeinträchtigt wird.

Fig. 2 zeigt eine Anordnung mehrerer Schreib-/Lesestationen (1, 2, 3, 4, 5, 6), wobei die Schreib-/Lesestationen (1, 2, 3) eine Gruppe (G1) bilden und auf einen ersten Sendekanal eingestellt sind, und die Schreib-/Lesestationen (4, 5, 6) eine Gruppe (G2) bilden und auf einen anderen Sendekanal eingestellt sind. Der mit (10) gekennzeichnete Bereich um jede einzelne Schreib-/Lesestation ist der Bereich, in dem die jeweiligen Schreib-/Lesestationen mit einem Transponder kommunizieren können, weil sich ein Transponder in der Energiereichweite der jeweiligen Schreib-/ Lesestationen befindet.

Dadurch, dass die Schreib-/Lesestationen (1, 2, 3 und 4, 5, 6) zyklisch ihren Sendevorgang unterbrechen und mindestens eine Schreib-/Lesestation der Gruppe (G1) und eine Schreib-/Lesestation der Gruppe (G2) für eine definierte Mindestzeit überprüfen, ob der für die gemeinsame Nutzung vorgesehene Sendekanal in dieser Zeit von keinem weiteren, hier nicht dargestellten Sender genutzt wird und die Schreib-/Lesestationen (1, 2, 3; 4, 5, 6) der Gruppe (G1 und G2) jeweils innerhalb ihrer Gruppe ihren Sendebetrieb synchron nach Ablauf dieser definierten Sendeunterbrechung wieder aufnehmen, ist der Betrieb der dicht nebeneinander angeordneten Schreib-/Lesestationen (1, 2, 3; 4, 5, 6) auf demselben Kanal möglich.

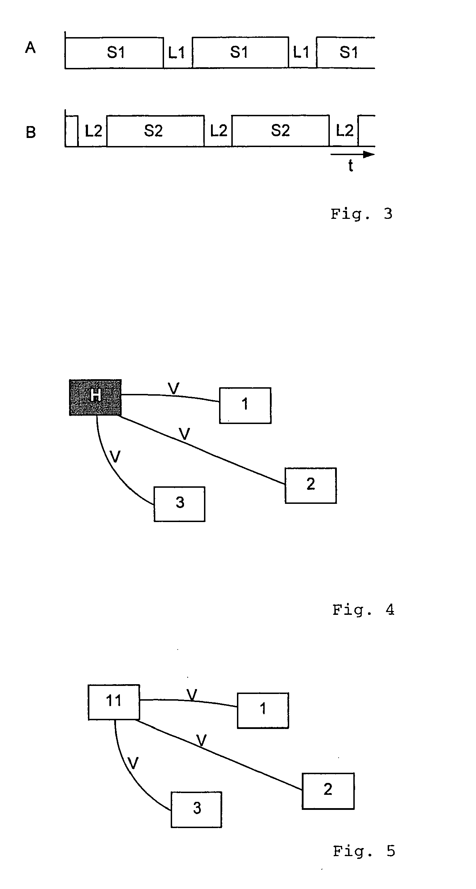

In Fig. 3 ist beispielhaft die zeitliche Abfolge des Sendevorgangs und der Unterbrechung des Sendevorgangs auf einem Kanal (A) und einem weiteren Kanal (B) dargestellt. In diesem Beispiel senden die Schreib-/Lesestationen (1, 2, 3) auf Kanal (A) und die Schreib-/Lesestationen (4, 5, 6) auf dem weiteren Kanal (B).

Während einer Periode (S1, S2) sind die Sender der Schreib-/Lesestationen (1, 2, 3; 4, 5, 6) eingeschaltet, während sie in der Periode (L1, L2) abgeschaltet sind, was mit dem Begriff einer definierten Sendepause beschrieben werden kann. In der Sendepause (L1, L2) prüft mindestens eine Schreib-/Lesestation (1, 2, 3) und mindestens eine Schreib-/Lesestation (4, 5, 6), ob der für die gemeinsame Nutzung vorgesehene Kanal (A, B) während der Sendepause (L1, L2) von keinem weiteren Sendesystem belegt wurde, wobei die Sendepause (L1, L2) für alle Schreib-/Lesestationen (1, 2, 3; 4, 5, 6) dieselbe Periodendauer aufweist.

Ist der für die gemeinsame Nutzung vorgesehene Kanal (A, B) während der Sendepause (L1, L2) frei geblieben, nehmen die Schreib-/Lesestationen (1, 2, 3; 4, 5, 6) ihren Sendebetrieb auf dem Kanal (A, B) wieder zeitlich synchron auf.

Wird der Kanal (A, B) während der Sendepause (L1, L2) von einem anderen Sendesystem belegt, können die Schreib-/ Lesestationen (1, 2, 3; 4, 5, 6) entweder so lange warten, bis der belegte Kanal wieder frei wird, oder die Schreib-/ Lesestationen (1, 2, 3; 4, 5, 6) suchen einen Ausweichkanal, um dort wieder synchron ihren Sendebetrieb zu beginnen.

Bevor eine Schreib-/Lesestation (1, 2, 3; 4, 5, 6) den Sendebetrieb auf einem Ausweichkanal beginnt, muss dieser Ausweichkanal für die für die Sendepause (L1, L2) definierte Dauer frei sein. Ist der gewählte Ausweichkanal für die definierte Sendepause frei, können die Schreib-/Lesestationen ihren Sendebetrieb auf diesem Ausweichkanal aufnehmen, weil sie sicher sein können, dass entweder keine weitere Schreib-/ Lesestation diesen Kanal derzeit verwendet oder, falls doch eine oder mehrere Schreib-/Lesestationen auf diesem Kanal senden, dass alle Schreib-/Lesestationen auf diesem Kanal nunmehr synchron senden, da jede Schreib-/Lesestation, die den Sendebetrieb für die definierte Sendepause eingestellt hatte, am Ende der Sendepause zeitlich synchron zu allen weiteren Schreib-/Lesestationen den Sendebetrieb (S1, S2) auf diesem Kanal wieder aufgenommen hat.

Fig. 4 zeigt eine mögliche Ausführungsform, bei der die Schreib-/Lesestationen (1, 2, 3), die jeweils auf demselben Sendekanal arbeiten, über Verbindungen (V) durch eine Steuereinheit (H) synchronisiert werden.

Die Steuereinheit (H) hat dabei die Aufgabe, den Sendevorgang und die Sendepause der Schreib-/Lesestationen (1, 2, 3) zu synchronisieren. Ferner hat die Steuereinheit (H) die Aufgabe, während der Sendepause zu prüfen, ob der für das Senden gewählte Kanal weiterhin frei ist, oder die Steuereinheit (H) fragt mindestens eine Schreib-/Lesestation (1, 2, 3) ab beziehungsweise delegiert das Überwachen wenigstens eines Sendekanals an eine der Schreib-/Lesestationen (1, 2, 3).

Erfolgt die Überwachung auf Kanalbelegung während der Sendepause durch wenigstens eine Schreib-/Lesestation (1, 2, 3), so ist es besonders vorteilhaft, wenn diese Schreib-/ Lesestation neben dem zuletzt zum Senden verwendeten Sendekanal auch in der Lage ist, zeitgleich infrage kommende Ausweichkanäle auf Belegung hin zu überprüfen.

Ist keine der Schreib-/Lesestationen (1, 2, 3) in der Lage, mehrere Kanäle zeitgleich auf Belegung hin zu überprüfen, kann in einer anderen Ausführungsform die Steuereinheit (H) bestimmen, welche Schreib-/Lesestation (1, 2, 3) welchen Kanal auf Belegung hin überprüft, um auf diesem Weg schnell einen möglichen Ausweichkanal zu ermitteln.

Da die Schreib-/Lesestationen (1, 2, 3) in der Regel in einem gewissen räumlichen Abstand zueinander stehen, kann es auch sinnvoll sein, dass alle Schreib-/Lesestationen dieselben Kanäle hinsichtlich ihrer Belegung durch andere Sendesysteme untersuchen, weil es in der Praxis durchaus vorstellbar ist, dass beispielsweise zwei Schreib-/Lesestationen einen freien Kanal detektieren, während eine weitere Schreib-/Lesestation denselben Kanal als belegten Kanal detektiert. Die Ursache hierfür kann beispielsweise eine räumlich weit entfernte weitere Schreib-/Lesestation sein, die nicht von der Steuereinheit (H) gesteuert wird, und die aufgrund der räumlichen Anordnung nur von einem Teil der von ihr gesteuerten Schreib-/Lesestationen (1, 2, 3) empfangen wird.

Sollte der Fall eintreten, dass der zum Senden beabsichtigte gemeinsame Sendekanal nicht für alle an die Steuereinheit (H) angeschlossenen Schreib-/Lesestation (1, 2, 3) gleichermaßen als frei detektiert wird, kann die Steuereinheit (H) entscheiden, ob alle Schreib-/Lesestationen (1, 2, 3) auf einen für alle Schreib-/Lesestationen (1, 2, 3) freien Sendekanal wechseln, um dort weiter synchron zu senden, oder ob die Schreib-/Lesestationen, deren Sendekanal nicht frei ist, so lange nicht senden, bis der gemeinsame Sendekanal auch wieder für die betreffenden Schreib-/Lesestationen frei geworden ist, oder die Steuereinheit (H) kann der wenigstens einen Schreib-/Lesestation, deren Sendekanal belegt ist, einen anderen freien Sendekanal zuweisen, damit diese wenigstens eine Schreib-/Lesestation dann zumindest vorübergehend einen anderen Sendekanal verwendet.

Die Verbindungen (V) können dabei als Steuerleitungen ausgeführt sein, über die eine digitale Information 0 oder 1 zum Start und Beenden des Sendevorgangs der Schreib-/ Lesestationen (1, 2, 3) übermittelt werden kann.

In einer weiteren Ausführungsform können die Verbindungen (V) als Kommunikationsleitungen ausgeführt werden, über die Informationen in Form von Datenworten zwischen der Steuereinheit (H) und der Schreib-/Lesestationen (1, 2, 3) unidirektional oder bidirektional ausgetauscht werden können.

In einer weiteren Ausführungsform ist die Verbindung (V) als HF-Schnittstelle (High Frequency) ausgeführt, bei der ein Informationsaustausch zwischen der Steuereinheit (H) und den Schreib-/Lesestationen (1, 2, 3) auf drahtlosem Weg stattfinden kann.

Fig. 5 zeigt eine weitere Ausführungsform, bestehend aus mehreren Schreib-/Lesestationen (1, 2, 3, 11), wobei der Schreib-/Lesestation (11) die zusätzliche Funktion einer Steuereinheit zukommt. Die Schreib-/Lesestation (11) vereint also die Merkmale der in Fig. 4 dargestellten Steuereinheit (H) mit den Merkmalen einer Schreib-/Lesestation (1, 2, 3). Die Verbindungen (V) zwischen den einzelnen Schreib-/Lesestationen (1, 2, 3, 11) können auch bei dieser Ausführungsform als Steuerleitung, Datenleitung oder als drahtlose Verbindung ausgebildet sein.

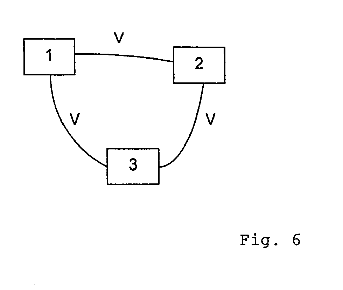

Fig. 6 zeigt eine weitere Ausführungsform, in der die Schreib-/Lesestationen (1, 2, 3) mittels Verbindungen (V) miteinander in Form eines Ringes verbunden sind und miteinander kommunizieren und sich auf diesem Weg synchronisieren.

In dieser Ausführungsform übermittelt jede Schreib-/ Lesestation (1, 2, 3) ihr Ergebnis der Detektion eines freien Kanales an die ihr jeweils benachbarten Schreib-/ Lesestationen. Aus den so gewonnenen Erkenntnissen entscheidet sich jede Schreib-/Lesestation für den Sendekanal, den sie für den nächsten Sendevorgang verwendet.

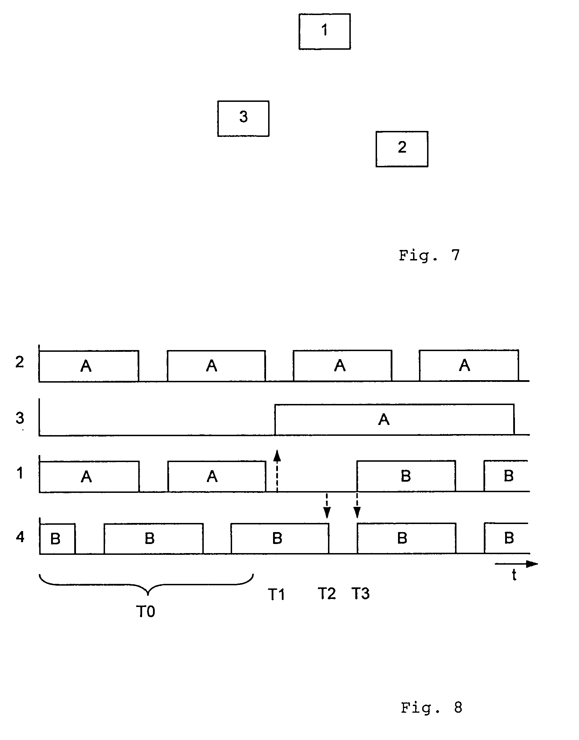

Die Synchronisation der Sendevorgänge und Sendeunterbrechungen kann in dieser Ausführungsform dem in Fig. 8 beispielhaft beschriebenen Verfahren für autarke, nicht vernetzte Schreib-/Lesestation entsprechen mit dem Unterschied, dass jede Schreib-/Lesestation zu Beginn und/oder am Ende eines Sendevorgangs eine entsprechende Information an die benachbarten Schreib-/Lesestationen des RFID-Systems sendet.

In einer vorteilhaften Ausführungsform kann jede Schreib-/Lesestation eine zyklische Information an die benachbarten Schreib-/Lesestationen senden, die eine Zeitinformation darüber enthält, wie lange die Schreib-/Lesestation bereits auf dem derzeitigen Sendekanal sendet oder wie lange sie noch auf dem Sendekanal senden wird. Aufgrund dieser Zeitinformation kann eine Schreib-/Lesestation, die beispielsweise nur zeitweise senden muss, sich mit der Schreib-/Lesestation synchronisieren, die als nächstes ihren Sendevorgang unterbrechen wird.

Die in Fig. 6 dargestellte Ausführungsform kann auch mit mehr als drei Schreib-/Lesestationen realisiert werden. Hierbei ist dann vorteilhaft jede Schreib-/Lesestation über die Verbindungen (V) mit jeder der anderen Schreib-/Lesestation ihres Verbundnetzes direkt verbunden und kann über diese Verbindung (V) in Kommunikation mit den Schreib-/ Lesestationen (1 bis 6) treten. Zur Synchronisierung von mehreren Schreib-/Lesestationen können nun immer neue Gruppierungen aus Schreib-/Lesestationen mit gleicher Sendeleistung entstehen. Eine Sonderform wäre, dass alle auf die gleiche Sendefrequenz gestellt werden.

Fig. 7 zeigt eine weitere besonders vorteilhafte Ausführungsform der Anordnung von Schreib-/Lesestationen (1, 2, 3). In dieser Ausführungsform kann auf die Verbindungen (V) zur Synchronisation der Schreib-/Lesestationen zwischen den Schreib-/Lesestationen (1, 2, 3), egal ob diese leitungsgebunden oder drahtlos ausgeführt sind, verzichtet werden, da sich die Schreib-/Lesestationen (1, 2, 3) jeweils selbstständig mit den Schreib-/Lesestationen (1, 2, 3) ihrer Umgebung synchronisieren können, ohne dass sie dazu mit diesen Schreib-/Lesestationen kommunizieren müssen.

Das Synchronisationsverfahren wird in Fig. 8 beispielhaft erläutert.

In Fig. 8 wird ein mögliches Verfahren beschrieben, bei dem eine Synchronisation von Schreib-/Lesestationen (1, 2, 4) und einer nicht zum RFID-System gehörenden anderweitigen Sendestation (8) ohne zusätzliche Verbindung realisiert ist. Zur Vereinfachung des Beispiels sei angenommen, dass nur zwei Sendekanäle (A und B) zur Verfügung stehen, und dass die Schreib-/Lesestationen (1, 2, 4) so angeordnet sind, dass das von der Sendestation (8) gesendete Signal von der Schreib-/Lesestation (1) aber nicht von der Schreib-/Lesestation (2) erkannt wird.

In der Phase T0 senden die Schreib-/Lesestationen (1 und 2) auf Kanal (A) synchron. Die Sendestation (8) sendet nicht und die Schreib-/Lesestation (4) sendet auf Kanal (B). Zum Zeitpunkt T1 beginnt die Sendestation (8), bei der es sich beispielsweise um einen ebenfalls für den Kanal zugelassenen anderweitigen Funkdienst handeln kann, auf Kanal (A) zu senden. Da nur die Schreib-/Lesestation (1) das von der Sendestation (8) gesendete Signal empfängt, darf die Schreib-/Lesestation (1) nicht mehr auf Kanal (A) synchron mit der Schreib-/Lesestation (2) senden, sondern muss sich einen Ausweichkanal zum Senden suchen. Dazu wartet die Schreib-/Lesestation (1) so lange, bis der nächste Kanal, auf dem sie senden kann, frei wird.

Zum Zeitpunkt T2 erkennt die Schreib-/Lesestation (1), dass der Kanal (B) frei geworden ist. Da die Sendepause für alle Schreib-/Lesestationen (1, 2, 4) dieselbe definierte Dauer hat, kann die Schreib-/Lesestation (1) nach Ablauf der für die Sendepause definierten Zeitspanne und unter der Voraussetzung, dass der Kanal (B) für die gesamte definierte Zeitspanne der Sendepause nicht durch eine andere Sendestation belegt wurde, zum Zeitpunkt T3 synchron mit der Schreib-/Lesestation (4) ihren Sendebetrieb auf dem Kanal (B) beginnen.

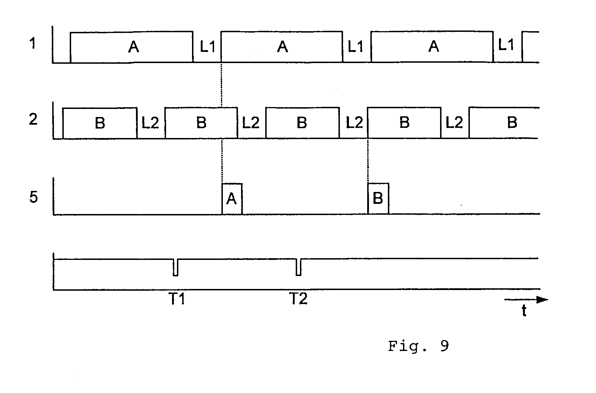

In Fig. 9 wird ein mögliches Verfahren beschrieben, bei dem eine Synchronisation von Schreib-/Lesestationen (1, 2, 5) realisiert ist, wobei die Schreib-/Lesestation (5) eine nur temporär sendende Schreib-/Lesestation ist und beispielsweise eine mobile Schreib-/Lesestation sein kann.

Zum Zeitpunkt T1 bekommt die Schreib-/Lesestation (5) den Sendeauftrag erteilt. Zu diesem Zeitpunkt startet die Schreib-/Lesestation (5) einen Hörvorgang auf mindestens einem Kanal (A, B). Sobald die Schreib-/Lesestation (5) eine Sendeunterbrechung (L1, L2) auf einem Kanal detektiert hat und die Länge der Sendeunterbrechung der dafür definierten Länge entspricht, synchronisiert sie ihren Sendevorgang auf diesen Kanal. Im Beispiel der Fig. 9 detektiert die Schreib-/Lesestation (5) die erste Sendeunterbrechung (L1) auf Kanal (A), was zur Folge hat, dass sich die Schreib-/Lesestation (5) auf den Sendevorgang von der Schreib-/Lesestation (1) auf Kanal (A) synchronisiert. Nachdem die Schreib-/Lesestation (5) ihren Sendeauftrag erledigt hat, beendet sie ihren Sendevorgang auf Kanal (A). Zum Zeitpunkt T2 erhält die Schreib-/Lesestation (5) einen erneuten Sendeauftrag. Da die Schreib-/Lesestation (5) die zeitlich nächste Sendeunterbrechung nun auf Kanal (B) detektiert, synchronisiert sie ihren Sendevorgang nunmehr mit der Schreib-/Lesestation (2) auf Kanal (B).

### Bezugszahlen

- 1 bis 6: Schreib-/Lesestationen
- 8: Sendestation
- 10: Bereich
- 11: Schreib-/Lesestation
- CT: belegter Sendekanal
- CR: Empfangskanal
- H: Steuereinheit
- V: Verbindungen
- A: Kanal
- B: Kanal
- S1: Sendeperiode
- S2: Sendeperiode
- L1: Sendepause
- L2: Sendepause
- G1: Gruppe von Schreib-/Lesestationen
- G2: Gruppe von Schreib-/Lesestationen

## Patentansprüche

1. Kommunikationsverfahren für ein RFID-System, bestehend aus wenigstens zwei Schreib-/Lesestationen, die wenigstens einen gemeinsamen Sendekanal zur Kommunikation von einer Schreib-/Lesestation zu jeweils wenigstens einem Transponder (Sendevorgang) nutzen können, und die wenigstens einen zweiten Kanal zur Kommunikation von dem jeweils wenigstens einen Transponder zu der jeweiligen Schreib-/ Lesestation (Empfangskanal) nutzen können, bei dem wenigstens eine Steuereinheit und/oder eine Schreib-/Lesestation während eines Hörvorganges die Belegung wenigstens eines Kanales zur Kommunikation von der Schreib-/Lesestation zu dem Transponder ermittelt,
**dadurch gekennzeichnet , dass** sämtliche Hör- und/oder Sendevorgänge auf einem Sendekanal (A, B) synchronisiert werden.

2. Kommunikationsverfahren nach Anspruch 1, **dadurch gekennzeichnet, dass** die Synchronisation der Hör- und/oder Sendevorgänge von einer gleichzeitig die Funktion der Steuereinheit (H) übernehmenden Schreib-/Lesestation (11) durchgeführt wird.

3. Kommunikationsverfahren nach Anspruch 1 oder 2, **dadurch gekennzeichnet, dass** wenigstens eine Schreib-/Lesestation (1, 2, 3; 4, 5, 6) und/oder eine Steuereinheit (H) den Hörvorgang durchführt und prüft, ob der zuletzt verwendete oder wenigstens ein anderer Kanal frei ist.

4. Kommunikationsverfahren nach Anspruch 1 oder 2, **dadurch gekennzeichnet, dass** sämtliche Schreib-/Lesestationen (1, 2, 3; 4, 5, 6) des RFID-Systems den Hörvorgang durchführen und prüfen, ob der jeweils zuletzt verwendete oder wenigstens ein anderer Kanal frei ist.

5. Kommunikationsverfahren nach Anspruch 1 oder 2, **dadurch gekennzeichnet, dass** sämtliche Schreib-/Lesestationen (1, 2, 3; 4, 5, 6) und die Steuereinheit (H) des RFID-Systems den Hörvorgang durchführen und prüfen, ob der jeweils zuletzt verwendete oder wenigstens ein anderer Kanal frei ist.

6. Kommunikationsverfahren nach Anspruch 1 oder 2, **dadurch gekennzeichnet, dass** in einem Kanal der Sendevorgang der wenigstens einen Schreib-/Lesestation (1, 2, 3; 4, 5, 6) für ein Zeitfenster unterbrochen wird, und dass der Beginn und das Ende dieses Zeitfensters von der Steuereinheit für alle auf dem Kanal sendenden Schreib-/Lesestationen (1, 2, 3; 4, 5, 6) synchron gesteuert wird.

7. Kommunikationsverfahren nach Anspruch 1 oder 2, **dadurch gekennzeichnet, dass** in einem Kanal der Sendevorgang der wenigstens einen Schreib-/Lesestation (1, 2, 3; 4, 5, 6) für ein Zeitfenster unterbrochen wird, und dass der Beginn dieses Zeitfensters von der Steuereinheit (H) für alle auf dem Kanal sendenden Schreib-/Lesestationen (1, 2, 3; 4, 5, 6) synchron gesteuert wird, und dass das Zeitfenster eine für alle Schreib-/Lesestationen (1, 2, 3; 4, 5, 6) vorgegebene Dauer aufweist.

8. Kommunikationsverfahren nach Anspruch 1 oder 2, **dadurch gekennzeichnet, dass** der Beginn des Sendevorgangs von der Steuereinheit (H) für alle auf dem Kanal sendenden Schreib-/Lesestationen (1, 2, 3; 4, 5, 6) synchron gesteuert wird, und dass der Sendevorgang eine für alle Schreib-/Lesestationen (1, 2, 3; 4, 5, 6) vorgegebene Dauer aufweist.

9. Kommunikationsverfahren nach Anspruch 1 oder 2, **dadurch gekennzeichnet, dass** die Steuereinheit (H) steuert, auf welchem Kanal oder auf welchen Kanälen die Schreib-/ Lesestationen (1, 2, 3; 4, 5, 6) senden.

10. Kommunikationsverfahren nach Anspruch 9, **dadurch gekennzeichnet, dass** die Steuereinheit (H) steuert, welche Schreib-/Lesestationen (1, 2, 3; 4, 5, 6) als Gruppe auf einem Kanal senden.

11. Kommunikationsverfahren nach einem der vorhergehenden Ansprüche, **dadurch gekennzeichnet, dass** die Steuereinheit (H) die wenigstens eine Schreib-/Lesestation (1, 2, 3; 4, 5, 6) über wenigstens eine Steuerleitung (V) ansteuert, über die wenigstens ein Steuersignal übertragen wird.

12. Kommunikationsverfahren nach Anspruch 11, **dadurch gekennzeichnet, dass** das wenigstens eine übertragene Steuersignal ein binäres Signal oder ein Datenwort ist.

13. Kommunikationsverfahren nach einem der Ansprüche 1 bis 10, **dadurch gekennzeichnet, dass** die Steuereinheit die wenigstens eine Schreib-/Lesestation (1, 2, 3; 4, 5, 6) drahtlos ansteuert.

14. Kommunikationsverfahren nach Anspruch 13, **dadurch gekennzeichnet, dass** die Steuereinheit (H) die wenigstens eine Schreib-/Lesestation (1, 2, 3; 4, 5, 6) über RF (Radio Frequency) über einen gesonderten Kanal, der ansonsten für die Datenübertragung vom Transponder zur Schreib-/Lesestation (1, 2, 3; 4, 5, 6) verwendet wird, ansteuert.

15. Kommunikationsverfahren nach Anspruch 1 oder 4,
**dadurch gekennzeichnet, dass** die wenigstens eine Schreib-/ Lesestation (1, 2, 3, 4, 5, 6) wenigstens eine zyklische Information an wenigstens eine mit ihr verbundene Schreib-/ Lesestation sendet.

16. Kommunikationsverfahren nach Anspruch 1, **dadurch gekennzeichnet, dass** die Schreib-/Lesestationen (1, 2, 3; 4, 5, 6) des RFID-Systems autark sind, und dass in einem Kanal der Sendevorgang der wenigstens einen Schreib-/Lesestation (1, 2, 3; 4, 5, 6) für ein Zeitfenster unterbrochen wird, und dass die wenigstens eine Schreib-/Lesestation (1, 2, 3; 4, 5, 6) den Sendevorgang auf einem Kanal beginnt, nachdem der Kanal für eine Mindestzeit als frei detektiert wurde.

17. Kommunikationsverfahren nach Anspruch 16, **dadurch gekennzeichnet, dass** die Mindestzeit, für die ein Kanal als frei detektiert werden muss, für alle Schreib-/Lesestationen (1, 2, 3; 4, 5, 6) dieselbe Dauer aufweist.

18. Kommunikationsverfahren nach Anspruch 16, **dadurch gekennzeichnet, dass** das Zeitfenster, für das der Sendevorgang unterbrochen wird, für alle Schreib-/Lesestationen (1, 2, 3; 4, 5, 6), die auf einem Kanal senden, dieselbe Dauer aufweist.

19. Kommunikationsverfahren nach Anspruch 18, **dadurch gekennzeichnet, dass** das Zeitfenster eine Dauer von fünf Millisekunden (ms) oder 100 Millisekunden (ms) aufweist.

20. Kommunikationsverfahren nach Anspruch 16, **dadurch gekennzeichnet, dass** die Dauer des Zeitfensters, für das der Sendevorgang von einer ersten Schreib-/Lesestation unterbrochen wird, von wenigstens einer weiteren Schreib-/ Lesestation detektiert und für ein eigenes Zeitfenster übernommen wird.

21. Kommunikationsverfahren nach Anspruch 16, **dadurch gekennzeichnet, dass** der Sendevorgang jeder Schreib-/Lesestation (1, 2, 3; 4, 5, 6) nach einer maximalen Sendezeit unterbrochen wird.

22. Kommunikationsverfahren nach Anspruch 16, **dadurch gekennzeichnet, dass** eine erste Schreib-/Lesestation eines RFID-Systems mit dem Sendevorgang beginnt und die weiteren Schreib-/Lesestationen sich auf den Beginn und das Ende des Sendevorgangs der ersten Schreib-/Lesestation synchronisieren.

23. Kommunikationsverfahren nach einem der vorhergehenden Ansprüche, **dadurch gekennzeichnet, dass** die Schreib-/ Lesestationen mit passiven Transpondern kommunizieren.

24. Kommunikationsverfahren nach einem der vorhergehenden Ansprüche, **dadurch gekennzeichnet, dass** die Schreib-/ Lesestationen auf dem UHF-Frequenzband mit den Transpondern kommunizieren.
